# EUROPEAN PATENT SPECIFICATION

(11) **EP 3 405 281 B1**
(45) Date of publication and mention of the grant of the patent: **01.06.2022**
(21) Application number: 17701915.5
(22) Date of filing: 20.01.2017
(51) Int. Cl.: B01J 2/12, B01J 2/28, C04B 18/02

(54) **BALLING MACHINE**
KNÄUELMASCHINE
MACHINE DE BOULETAGE

(30) Priority: 22.01.2016 GB 201601183
(43) Date of publication of application: 28.11.2018
(73) Proprietor: Darlow Lloyd & Sons Limited, Bridgend, Mid Glamorgan CF35 6HL (GB)
(72) Inventor: MCCORMACK, Craig, Llanishen Cardiff CF14 5FJ (GB)
(74) Representative: Abel & Imray LLP
(86) International application number: PCT/GB2017/050141
(87) International publication number: WO 2017/125751

(56) References cited:
- CA-A- 646 450
- CA-A- 646 450
- CA-A- 646 450
- CA-A- 655 057
- CA-A- 655 057
- CA-A- 655 057
- US-A- 2 920 344
- US-A- 2 920 344
- US-A- 2 920 344
- US-A- 2 984 860
- US-A- 2 984 860
- US-A- 2 984 860
- US-A- 2 984 861
- US-A- 2 984 861
- US-A- 2 984 861
- US-A- 5 620 251
- US-A- 5 620 251

## Description

### Field of the Invention

The present invention concerns balling machines for use in the manufacturing of aggregate and a method for balling material comprising the step of providing such a balling machine.

### Background of the Invention

Industries, such as steelmaking, quarrying, waste recycling, construction and demolition, typically produce a large amount of waste material. In recent years there has been a focus on recycling waste material and recovering usable materials therefrom. Small particles of waste material, known as fine material or simply fines, have typically represented a challenge to cost effectively recycle and are either stockpiled or landfilled, often at significant cost.

A known use of waste material is in manufactured aggregates. In order to produce manufactured aggregates from fine material, the fine material must be formed into balls or pellets of a size suitable for use as aggregate. To form the fine material into balls or pellets it is necessary to agglomerate the small particles. This may be done in a balling machine. Typically, balling machines work by tumbling the fine material in a rotating apparatus with a binder material. Tumbling the fine material and the binder material initially causes the small particles of fine material to gather together into slightly larger particles. The slightly larger particles will continue to grow in size as they pick up more material; this eventually forms suitably sized balls.

Prior art balling machines suffer from various disadvantages. For example, prior art machines may provide little control over the size of ball produced; it may be difficult to control the addition of the required binder materials and/or water; and/or the binder materials may have to be pre-mixed with the fine material.

US2984861 and CA646450 disclose a pelletizing machine for pelletizing finely divided materials. The device comprises a drum rotated by a motor drive, a shoot for delivering material during rotation of the drum, a conveyer for withdrawing the pelletized material, radially extending baffles projecting inwards with deflectors inclined between the baffles, and cutters for keeping the surfaces of the deflectors scraped free of excess material.

US2920344 and CA655057 disclose a granulating machine. Finely divided material, e.g. iron ore, fly ash, and glass grinding waste is pelleted by feeding it along a conveyer to a rotating drum, having baffles with inclined deflectors between the baffles. The spacing between the baffles and their height decreases from the feed to the discharge end. Fixed scoops and scrapers are provided between the baffles.

US2984860 discloses a balling drum apparatus comprising an immovable cheese cutter type of scraper to reduce excessive build-up on baffles and deflectors inside the drum.

US5620251 discloses a compacting granulator comprising a substantially horizontal rotatable drum through which an eccentric shaft extends. The shaft carries compacting means which hurl up material under treatment. The material, while hurled up, is brought in intimate contact with a treatment liquid sprayed through a nozzle. A stationary scraper is also provided in the drum.

The present invention seeks to mitigate the above-mentioned problems.

The present invention seeks to provide an improved balling machine.

### Summary of the Invention

The present invention provides, according to a first aspect, a balling machine for use in the manufacture of aggregate, the machine comprising: a rotatable tube having an inlet end and an outlet end; and a scraper disposed within the rotatable tube, the scraper comprising a leading edge having teeth or serrations; wherein the scraper is arranged to make a reciprocating movement parallel to an axis of the rotatable tube, the teeth or serrations being spaced apart further than the distance over which the scraper oscillates such that the scraper allows, as the scraper reciprocates in use, a build-up of circumferential ridges of material on an internal surface of the rotatable tube.

The balling machine may also comprise an internal mixing device disposed within the tube; the mixing device comprising movable elements that are disposed in a lower region of the tube and are drivingly movable relative to the tube.

The term balling machine will be understood by the person skilled in the art to be a machine designed to agglomerate particles of material. The agglomerates produced may be of a variety of cross-sectional shapes including, but not limited to, circular and oval. Balling Machines may also be referred to as manufactured aggregate machines, aggregate manufacturing machines, or pelletising machines. The balling machine may be useable in the manufacture of Hydraulically Bound Material (HBM).

The balling machine may be a standalone machine. The balling machine may be added to an existing equipment setup, for example including a wash plant and/or a filter press, for example in a quarry.

The balling machine may be so sized that it can be transported by road, for example on the load bay of a lorry. The balling machine may be permanently or semi-permanently affixed to a trailer.

The rotatable tube may have a substantially circular cross section. The rotatable tube may be substantially cylindrical. The rotatable tube may have an off-circular or irregular cross section. The rotatable tube may be elongate. The rotatable tube may have a length up to 30m. The rotatable tube may have a length up to 28m. The length of the rotatable tube may be more than 5m. The length of the rotatable tube may be between 10m and 28m; for example the length may be 20m. The rotatable tube may have an internal diameter between 0.5m and 5m, or between 1m and 3.5m; for example the internal diameter may be 2m.

The rotatable tube may be supported using rollers. This may allow low friction rotational movement of the tube. The rotatable tube may be driven by a motor which transfers movement through a chain, belt and/or gear system. The person skilled in the art will readily envisage alternative support apparatus and drive mechanisms applicable to the first aspect of the invention. The rotation speed of the rotatable tube may be adjustable. The rotatable tube may be rotatable at a speed up to 30RPM, or up to 25RPM, or up to 20RPM.

In use, the rotation of the rotatable tube may replicate the effect of rolling particulate material down an inclined surface, thereby encouraging agglomeration of the material. The balling machine may therefore be arranged such that rotation of the rotatable tube causes agglomeration of the material by a rolling motion; thus resulting in the formation of balls of material.

In use, material may be fed into the rotatable tube via the inlet end. Material fed into the rotatable tube via the inlet end will hereinafter be referred to as 'input material'. In use, material may exit the rotatable tube via the outlet end. Material exiting the rotatable tube via the outlet end will hereinafter be referred to as 'balled material'. The material in the rotatable tube, including the input material and any additional material, will hereinafter be referred to as 'material being balled'. The skilled person will appreciate that the inlet end and/or outlet end of the rotatable tube may not refer to the absolute end of the rotatable tube.

The rotatable tube may be inclined such that the inlet end is elevated with respect to the outlet end. The incline may be at an angle between 1 degree and 30 degrees, or between 1 degree and 20 degrees; for example 10 degrees. Advantageously, the inclination of the rotatable tube enables the material being balled to move from the input end of the rotatable tube to the output end of the rotatable tube under the influence of gravity. This removes the need for provision of a screw, angled paddles or the like to mechanically push the material being balled towards the output end.

The angle of inclination may be adjustable. Hydraulic jacks may be provided at the inlet end and/or the outlet end to enable the angle of elevation to be adjusted. The angle of inclination may affect the average particle size of the balled material and the rate at which the balled material is produced. The angle of inclination may therefore be adjusted in dependence on the composition of the input material and the desired characteristics of the product. For example, a larger inclination angle may mean the material being balled travels from the inlet end to the outlet end faster, and thus spends less time aggregating in the tube; the balled material may therefore have a smaller average particle size and the balling machine will output balled material at a higher rate.

The internal surface of the rotatable tube may comprise at least one ridge. Preferably a plurality of ridges, more preferably 6 or more ridges, are provided. For example, 12 ridges may be provided. The ridges may be spaced substantially equally around the circumference of the rotatable tube. The ridges may extend lengthways along the rotatable tube. The ridges may extend partway or substantially fully along the length of the rotatable tube. The ridges may be parallel to the longitudinal axis of the tube, or may be at an angle. The ridges may be in the form of bars attached to the internal surface of the rotatable tube. The ridges may, for example, have a rectangular cross section.

The ridges may help increase the height to which the material is lifted during rotation of the rotatable tube and/or reduce sliding of the material being balled on the inner surface. The efficiency of the balling machine and/or the quality of the balled material may thereby be increased.

The ridges may promote the building up of a layer of material on the internal surface of the rotatable tube. A layer of material on the internal surface of the rotatable tube may also help lift the material being balled higher and reduce sliding. Further, a layer of material built up on the internal surface of the rotatable tube may reduce the wear on the rotatable tube itself and help extend the lifetime of the rotatable tube. The ridges may therefore be particularly advantageous when a balling process, utilizing the balling machine, is initially started up and no layer of material is yet present.

The internal mixing device may comprise movable elements in the form of rotatable paddles and/or blades. The internal mixing device may comprise a rotatable shaft, on which the paddles and/or blades may be mounted. The shaft may have an axis which runs parallel to the axis of the rotatable tube. The movable elements may rotate in a plane perpendicular to the axis of the rotatable tube. At least some, or all, of the movable elements may each have a substantially flat surface for interacting with material in the rotatable tube. The movable elements may have a substantially flat face having a normal substantially parallel to the axis of the rotatable tube. The paddles and/or blades may have a radial diameter of between 100mm and 600mm, or between 200mm and 500mm; for example 300mm.

The internal mixing device may be provided proximate the bottom of the internal surface of the rotatable tube. That is to say, the internal mixing device may be disposed near the lowermost internal extent of the cross section of the rotatable tube. In cross section, the internal mixing device may be in a lower region of the rotatable tube. It will be understood that whilst the internal mixing device may be positioned close to the internal surface of the tube, it may not interact with the internal surface itself.

The internal mixing device may extend fully along the length of the rotatable tube. The internal mixing device may extend partway along the length of the rotatable tube. For example the internal mixing device may extend from the inlet end of the tube to approximately half way along the length of the tube. The internal mixing device may extend up to 5m into the tube. The distance over which the internal mixing device may extend into the tube may be between 0.5m and 5.0m, or may be between 1.0m and 4.0m; for example 3.0m.

The internal mixing device may be provided in a first portion of the tube. The first portion may therefore be where the material being balled is primarily mixed together. In the first portion the material being balled may undergo at least some agglomeration; although it will be appreciated that the internal mixing device may break up those balls which do begin to form. The first portion of the tube may be referred to as a mixing portion.

There may be a second portion of the tube in which the internal mixing device does not extend. In the second portion the material being balled may be allowed to agglomerate and form balls without interference from the internal mixing device. The second portion may be referred to as a balling portion.

The first (mixing) portion may be closer to the inlet end than the second (balling) portion. The material may therefore be mixed prior to it being forming into balls. The first portion may include the inlet end and the second portion may include the outlet end.

The first portion of the tube may be less than 20% or 30% or 40% of the length of the tube. The second portion may be less than 60% or 70% or 80% of the length of the tube.

The rotation of the internal mixing device may be powered by a motor provided outside the rotatable tube. The rotational speed of the internal mixing device may be adjustable. For example, the internal mixing device may be rotatable at a speed up to 300RPM, or up to 500RPM, or up to 700RPM. In use, the shaft may rotate in the same direction as the rotatable tube, for example both the shaft and the rotatable tube may rotate clockwise. In use, the shaft may rotate in a different direction to the rotatable tube, for example the shaft may rotate clockwise and the rotatable tube may rotate anticlockwise.

Providing an internal mixing device within the rotatable tube may advantageously improve the mixing of the input material with additive material, such as binder material, absorber material and water. Fully mixing the input material with such additive material is important for producing an aggregate with consistent and uniform properties. For example, incomplete mixing of the input material with binder material may negatively impact the quality and strength of the resultant aggregate. The internal mixer may advantageously help break up clumps of the material being balled as it forms into balls. The mixing device may take various forms, in addition to or instead of mixing it may have the effect of slicing or pre-granulating. The combination of the rotatable tube and internal mixing device advantageously provides a reduction in mixing time as compared to a separate external mixer and balling machine.

The internal mixing device may be removable, for example for cleaning or for use of the rotatable tube independently of the internal mixing device. The internal mixing device may be moveable to one side of the rotatable tube, for example if it is not required for a particular mix.

The balling machine comprises a scraper disposed within the rotatable tube. The scraper may be disposed proximate the internal surface of the rotatable tube. The scraper may have a leading edge which is very close to, although does not make contact with, the internal surface of the rotatable tube. Alternatively, at least part of the leading edge may make contact with the internal surface of the rotatable tube. The leading edge of the scraper is toothed or serrated. The teeth may be replaceable. The leading edge may comprise a brush, for example for use with rotatable tubes having a non-circular cross section. In the case where the internal surface of the rotatable tube comprises one or more ridges, the scraper may be arranged to permit the build-up of a layer of material between the ridges.

The scraper may extend substantially along the length of the rotatable tube. The scraper may extend partway along the length of the rotatable tube.

The scraper is arranged to prevent a build-up of the material being balled beyond a predetermined thickness. Build-up of the material being balled on the internal surface of the machine may particularly be a problem when balling wet and/or adhesive material.

The scraper is arranged to make a reciprocating movement parallel to the axis of the rotatable tube. The scraper may be mounted externally to the rotatable tube at the inlet end and/or the outlet end. The scraper may be mounted on a set of linear bearings and/or sliders. A motor may be disposed at an end of the scraper and may drive the reciprocating movement, for example via an offset cam connected to the scraper. Alternatively or additionally the scraper may comprise a rotating brush.

The reciprocating movement may advantageously reduce build-up of the material being balled on the interior surface of the rotatable tube and on the scraper itself. This may advantageously reduce the downtime associated with cleaning the balling machine. Another advantage provided by a scraper comprising reciprocating teeth is that the interior surface of the rotatable tube may be roughened. This may reduce sliding of the material being balled on the inner surface, thereby increasing rolling speed of the balls of material. Roughening the interior surface may also increase the height to which the material is lifted during rotation of the rotatable tube. The efficiency of the balling machine and/or the quality of the balled material may thereby be increased.

The scraper is arranged to allow a layer of material to build up on the internal surface of the rotatable drum having a non-uniform thickness. In particular, the scraper is arranged to allow the formation of circumferential ridges (rings) of material on the internal surface of the rotatable tube. As the scraper moves back and forth in use, the ridges can build up on the internal surface of the rotatable tube. The scraper comprises teeth or serrations spaced apart further than the distance over which the scraper oscillates. The ridges of material may increase the contact area between the material being balled and the internal surface of the tube. This may also help lift the material being balled higher and reduce sliding.

The balling machine may comprise a first input unit. The first input unit may provide a means for adding additive material to the material being balled, for example binder materials and/or absorber materials. The first input unit may comprise a feed pipe. The feed pipe may be provided within the rotatable tube. The feed pipe may extend at least partway along the length of the rotatable tube. The feed pipe may extend up to 4m into the tube. The distance over which the feed pipe may extend into the tube may be between 0.5m and 5.0m, or may be between 1.0m and 4.0m; for example 3.0m. The position of the feed pipe may be movable with respect to the rotatable tube. The feed pipe may extend into the rotatable tube from the input end of the rotatable tube.

The feed pipe may be provided with a hopper for input of additive material into the feed pipe. The first input unit may comprise a rotatable Archimedes screw. The screw may be disposed within the feed pipe for transporting additive material through the feed pipe. The speed of rotation of the rotatable screw, thereby the speed at which additive material is transported through the feed pipe, may be adjustable.

The first input unit may comprise one or more exit holes, through which additive material may pass into the rotatable tube. The exit holes may be provided at predetermined positions along the underneath of the feed pipe. The exit holes may be adjustable in size, for example by having an adjustable diameter and/or width. The size of the exit holes may be adjustable remotely from the exit holes themselves. Each exit hole may be individually adjustable. The adjustable exit holes may provide a means by which to control the amount of additive material that can be input by the first input unit.

Adjustment of the size of the exit holes and/or speed of the screw may allow improved control of the addition of additive material to the material being balled. For example, fine adjustment of the amount of binder material used may advantageously prevent wastage due to excessive addition of binder material. Further, adding more or less binder in certain positions in the rotatable tube may allow improved control of the size of the particle size of the balled material.

The balling machine may comprise a second input unit. The second input unit may have any of the features of the above described first input unit. The second input unit may have the same features as the first input unit. The feed pipe of the second input unit may extend into the rotatable tube from the output end of the rotatable tube.

In use, the second input unit may add coating material to coat the material being balled and/or the balled material. This coating material may comprise absorber material. The absorber material may act as a drying agent. Drying the surface of the balled material may advantageously reduce the chance the balls will stick to each other. Further, the absorber material may be gritty. Coating the balled material with absorber material may therefore advantageously provide the balls with a rough surface that improves their performance as an aggregate.

The balling machine may comprise a fluid input device. The fluid input device will usually be arranged to supply a liquid and may, for example, be a water input device. The fluid input device may comprise one or more pipes provided within the rotatable tube for delivering liquid into the rotatable tube. The pipes may extend along the length of the rotatable tube. The pipes may extend at least partly along the length of the rotatable tube. The pipes may have fluid exit holes and/or nozzles. The exit holes or nozzles may be provided at predetermined positions along the pipe. The nozzles may be adjustable for adjusting the throughput of fluid and/or preventing the throughput of fluid. The nozzles may be individually adjustable. The nozzles may be remotely adjustable. The nozzles may be arranged to add fluid to the material being balled in the form of a spray and/or a fine mist. The flow rate of the fluid in the pipes may be adjustable. In use, adding particular quantities of liquid, for example water, at certain positions in the rotatable tube may allow improved control of particle size of the balled material.

The fluid input device may be connected to an external fluid supply. The fluid input device may be connected to a first reservoir for holding a first fluid, for example water. The fluid input device may be connected to a second reservoir for holding a second fluid, for example comprising a pigment and/or dye for colouring the aggregate. The second reservoir may be connected to the first reservoir and/or to the external fluid supply via an isolation valve. The isolation valve may be remotely operable.

The balling machine may comprise an inlet conveyor arranged to feed input material into the inlet end of the rotatable tube. The balling machine may comprise a hopper for accepting input material. The hopper may deposit input material onto the inlet conveyor. The hopper may be a screw hopper. The input conveyor may be extended, or supplemented by an additional conveyor, such that the conveyor(s) can be loaded via an excavator. For example the input conveyor and/or additional conveyor may have a total length of 6 meters to allow the material to be loaded to the desired height. The inlet conveyor may be arranged to deposit input materials, above the internal mixing device. For example an end of the inlet conveyor may be above the internal mixing device. The balling machine may comprise a chute and/or a screw feeder in addition to or instead of the inlet conveyor.

The balling machine may comprise an exit conveyor arranged to receive balled material from the outlet end of the rotatable tube. The outlet end of the rotatable tube may have an edge disposed above the exit conveyor such that balled material exiting the rotatable tube may fall onto the exit conveyor. The exit conveyor may transport the balled material approximately at right angles to the axis of the rotatable tube. The exit conveyor may transport the balled material away from the rotatable tube to other aggregate processing equipment or to a location at which the balled material is temporarily stockpiled.

The balling machine may be arranged to produce balled material having an average particle size greater than 0.5mm, or greater than 1mm, or greater than 5mm or greater than 10mm. The balling machine may be arranged to produce balled material having an average particle size less than 50mm, or less than 30mm, or less than 20mm, or less than 15mm. For example, the average particle size may be between about 10mm and about 50mm. It may be possible to use the balling machine to simultaneously produce balled material having a range of particle sizes. As set out above, the various adjustable aspects of the balling machine may be adjusted so that in use the particle size and/or the distribution of particle sizes of the balled material may be varied, for example to produce balled material for the production of aggregate for a particular application. The balling machine may comprise a screen arranged to separate the balled material on the basis of particle size. The balling machine may comprise a means by which different sizes of particle are diverted to different stockpiles.

The balling machine may comprise a recycling conveyor. The recycling conveyor may return particular parts of the balled material to the inlet end of the tube, optionally via the inlet conveyor. For example the recycling conveyor may return oversized, undersized or damaged balled material to the inlet end of the tube.

The balling machine may comprise an inlet screen for removing debris, tramp material, and/or oversized particles.

The balling machine may comprise a control unit where one or more of the following may be controlled, where applicable: rotational velocity of the rotatable tube, rotational velocity of the mixing device, speed of reciprocating movement of the scraper, adjustment of the exit holes of the first and/or second input unit, adjustment of the rotational speed of the screw of the first and/or second input unit, adjustment of the nozzles of the fluid input device, adjustment of the fluid flow rate in the pipes of the fluid input device, speed of the inlet, outlet and/or recycling conveyor, and/or operation of the screen.

According to a second aspect of the invention there is also provided a method of balling material, the method comprising the steps of: providing a balling machine according to the first aspect of the invention; feeding an input material into the inlet end of the rotatable tube; adding a binder material to the input material; balling the input material and binder material by rotating the rotatable tube, wherein the scraper is reciprocated and causes circumferential ridges of the input material to build up on the internal surface of the rotatable tube; and collecting balled material from the outlet end of the rotatable tube. The method may further comprise a step of operating the internal mixing device.

The term balling will be understood by the person skilled in the art to mean agglomerating particles of material. As above, the agglomerates produced may be of a variety of cross-sectional shapes including, but not limited to, circular and oval. Balling may comprise binding of the material. The method of balling material may produce Hydraulically Bound Material (HBM). Balling may comprise pelletizing.

The input material may be in the form of particles and/or grains. For example the input material may be in the form of dust and/or fines. The dust and/or fines may comprise particles of which more than 90% by mass have a size of between 1 micron and 6mm, or between 1 micron and 1mm; for example 0.5mm. The size may be the mean greatest dimension of the particle. The input material may be in the form of sludge comprising dust and/or fines.

The input material may comprise steelmaking slag, ironmaking slag, waste material from quarrying, waste material from construction, waste material from demolition, waste material from waste recycling, and/or landfill leachate. The input material may additionally comprise cementitious material.

The method may comprise the step of reducing the particle size of the input material to produce fines and/or a dust, for example by crushing or pulverizing.

The step of feeding an input material into the inlet end of the tube may comprise providing the input material onto the inlet conveyor.

The binder material may comprise at least one of the following: a cementitious material, recycled steelwork fines, recycled ashes, and/or dusts from power stations. The binder material may be selected in dependence on the input material.

The step of adding a binder material to the input material may comprise adding binder material to the input material after the step of feeding the input material into the rotatable tube. The step of adding a binder material to the input material may comprise providing the first and/or second input unit with the binder material. The method may then comprise the step of conveying the binder material through the feed pipe, through the exit holes and into the material being balled in the rotating rotatable tube.

The step of adding a binder material to the input material may comprise adding binder material to the input material prior to the step of feeding the input material into the rotatable tube. There may be a step of mixing the binder material and the input material prior to the step of feeding the input material into the rotatable tube. The binder material and the input material could then be considered to be premixed.

The binder material may be added such that the ratio of binder material to input material is between 1% (1:100) and 30% (3:10), or between 4% (4:100) and 20% (2:10); for example the ratio of binder to input material may be 10% (1:10).

The step of balling the input material may comprise rotating the tube at a speed between 5RPM and 25RPM, or between 10RPM and 20RPM; for example 11RPM. The step of balling the input material may comprise rotating the shaft of the internal mixing device at a speed between 50RPM and 500RPM, or between 100RPM and 300RPM; for example 200RPM. The shaft may rotate in the same direction as, or opposite direction to, the tube. Of course, the skilled person will appreciate that the rotational speed of the rotatable tube and internal mixing device will depend on many factors, including: the length and diameter of the tube, the desired size of the particles of the balled material, the composition of the input material and/or the moisture content of the input material. It may be that lower rotational speeds of the rotatable tube produce more rounded balled material. Balled material having a generally rounded shape may be referred to as pellets and balled material having a more uneven shape may be referred to as aggregate.

The method may comprise a step of adding an absorber material to the input material. The step of adding an absorber material to the input material may comprise adding absorber material to the input material prior to the step of feeding the input material into the tube. The step of adding an absorber material to the input material may comprise adding absorber material to the input material after the step of feeding the input material into the tube. The absorber material may absorb and retain at least some of the liquid of the input material.

The step of adding an absorber material to the input material may comprise providing the first and/or second input unit with the absorber material. The method may then comprise the step of conveying the absorber material through the feed pipe, through the exit holes and into the material being balled in the rotating rotatable tube. The step of adding an absorber material may comprise coating the balled material with absorber material.

The method may further comprise a step of adding material proximate to the outlet end of the rotatable tube. The material added may be an absorber material and/or coarse dust and/or drying material and/or finishing material. For example, the material may be added 1m from the outlet end of the rotatable tube. The material may coat the balls of material to give them a dry surface; advantageously this may prevent the balled material from sticking together when stockpiled and, if gritty material is used, it may advantageously improve the balled material's performance as aggregate.

The method may comprise a step of adding a fluid to the input material. The fluid may comprise or consist of liquid, for example water. The step of adding fluid to the input material may comprise adding fluid to the input material prior to the step of feeding the input material into the tube. The step of adding fluid to the input material may comprise adding fluid to the input material after the step of feeding the input material into the tube. The step of adding a fluid may comprise adding fluid via the fluid input device.

The method may comprise the step of ascertaining the water content of the input material and calculating the required amount of absorber material or fluid to be added to the input material to produced balled material of a desired particle size and/or composition. The method may comprise the step of monitoring the composition and/or moisture content of the balled material and adding more binder material, absorber material and/or fluid to the material being balled in order to produce balled material of a desired particle size and/or composition.

The method may further comprise a step of adding colourant. The colourant may be added to the input material before it is fed into the rotatable tube, or it may be added to material in the rotatable tube, or it may be added to the balled material after it has been collected from the outlet end of the rotatable tube. The step of adding colourant may comprise adding colourant to the material being balled. The step of adding colourant may comprise coating the balled material with colourant.

The colourant may be a pigment. The pigment may be provided in suspension in a liquid and/or as a powder. The colourant may be a dye. The dye may be provided in solution and/or as a powder.

The colourant may be added via the fluid input device. The colourant may be added via the first and/or second input units. The colourant may be mixed with the input material by rotation of the tube and/or operation of the internal mixing device.

The step of coating the balled material with colourant may comprise immersing the balled material in a solution or suspension of colourant. The step of coating the balled material with colourant may comprise spraying the balled material with a solution or suspension of colourant.

The point at which the colourant is added may determine the depth to which the colourant is present in the balls of the balled material. Adding the colourant to the rotatable tube at a stage where the balls of material have not formed, or are only beginning to form, may mean that the colourant is present throughout the depth of the balls of material. This may have the advantage that if the balls of material were later crushed or split, the surface of the resultant particles may also appear coloured by the colourant. The later in the balling process the colourant is added, i.e. the closer to the outlet end of the tube the colourant is added, the less likely it is for the colourant to penetrate through the whole ball. The colourant may therefore only be present to a certain depth within the ball. Having the colourant present throughout, or substantially throughout, the balls may make the colourant less susceptible to leaching from the balls; particularly as compared to balls which have only been coated in colourant.

The step of collecting aggregated material from the outlet end of the tube may comprise transporting the aggregated material on the exit conveyor.

The method may include the step of producing manufactured aggregate from the balled material. The method may be carried out in batches. The method may be carried out substantially continuously.

According to another aspect of the invention there is also provided a method of manufacturing aggregate comprising a method of balling material according to the second aspect of the invention.

There may be other uses for the balling machine of the first aspect. For example it may be possible to use the balling machine for stabilizing certain materials. Using the balling machine to stabilize certain materials may reduce or eliminate the need for materials to be put through a filter press.

According to a third aspect of the disclosure there is provided a method of indicating the position of an underground utility, the method comprising the step of providing aggregate proximate the utility, wherein the aggregate has a colour which is in contrast to the colour of the local underground environment. Said method is disclosed but is not part of the invention.

The underground utility may comprise a pipe, a cable and/or a duct. The pipe, cable and/or a duct may be for transmission of electricity (including high voltage electricity), telecommunications, drinking water, sewage and/or gas. The underground utility may therefore include: electric power cables and/or ducts; telecommunication, alarm and/or signal cables and/or ducts (including fiber optic cables); gas, oil, steam, petroleum and/or other flammable material pipes; sewage and/or drain pipes; drinking water pipes; reclaimed water, irrigation and/or slurry pipes.

The third aspect of the disclosure may provide a particularly efficient and effective way of indicating the position of an underground utility. According to the third aspect it is envisaged that the presence of the contrasting coloured aggregate indicates, for example to someone excavating the ground, that an underground utility is positioned proximate where they are excavating.

The aggregate may be natural aggregate. The natural aggregate may be artificially coloured by a colourant. The aggregate may be manufactured aggregate. The manufactured aggregate may be coloured by a colourant. The manufactured aggregate may be made, at least in part, using the balling machine according to the first aspect of the invention and/or using the method according to the second aspect of the invention; the aggregate may also be made by other methods in this third aspect of the disclosure.

An advantage of using aggregate made according to the first and/or second aspect of the invention may be that it is possible to provide aggregate having colour present throughout the aggregate particles. If the aggregate is crushed or split in any way the resultant particles may still have a coloured surface. Additionally the colourant may be less susceptible to leaching from the aggregate, as compared to aggregate whose surface has been dyed.

The aggregate may be provided within a volume proximate the underground utility. For example, the aggregate may be provided in a volume abutting the underground utility. The aggregate may be provided in a volume not directly abutting, and spaced from, the underground utility. The aggregate may be provided in a volume above, to one side, to the other side, and/or below the underground utility. The aggregate may be provided in a volume which extends a whole way around the underground utility. The aggregate may be provided in a volume extending only partly around the underground utility. The aggregate may be provided in a volume which extends up to 1 meter from the pipe.

It will be understood that the local underground environment may comprise the volume of ground which substantially surrounds the volume taken up by the aggregate and underground utility.

Providing the aggregate in a volume which extends a whole way around the underground utility advantageously provides an indication of the position of the underground utility to those approaching the underground utility from any angle. Those carrying out excavation of the underground utility, or excavation proximate the underground utility, may therefore be alerted to the presence of the underground utility regardless of their position relative to the underground utility.

The method may further comprise a step of providing an excavation. The method may comprise a step of providing the aggregate into the excavation. The excavation may be an excavation made for the purposes of repairing and/or maintaining the underground utility. The excavation may be an excavation made for the purposes of installing the underground utility.

The excavation may be a trench into which an underground utility is to be laid. The method may comprise a step of distributing a layer of material in the trench, this material may be known as bedding. The bedding may comprise the aggregate. The method may comprising a step of providing the underground utility into the excavation. The underground utility may be provided atop the bedding. The method may comprise a step of providing a layer of material around the sides of the underground utility, this material may be known as haunching. The haunching may comprise the aggregate. The method may comprising a step of providing a layer of material on top of the haunching and on top of any exposed portion of the utility, this material may be known as backfill. The backfill may comprise a plurality of layers. The backfill may comprise an initial backfill and a final backfill. A layer of the backfill may comprise the aggregate.

The third aspect of the disclosure may require no additional underground methods of indicating the position of an underground utility. In particular, the third aspect may do away with the need to lay warning boards over the underground utilities. This may improve the speed by which underground utilities may be installed and/or maintained. It may be, however, that warning boards may still be used in addition to coloured aggregate to indicate the position of underground utilities.

In order to provide the indicating function, i.e. in order for the aggregate to effectively indicate the position or presence of an underground utility, the colour of the aggregate should contrast with (i.e. differ from) the colour of the local underground environment to a sufficient extent. The contrast should preferably be distinguishable and noticeable to an ordinary individual with no colour vision deficiency. The contrast should preferably be distinguishable and noticeable in lighting conditions which the skilled person might reasonably expect underground utility excavation to be carried out in. Such lighting conditions may include sunlight in a variety of weather conditions and/or artificial light for example from a work light.

The aggregate may include a primary colour. The aggregate may include a secondary colour. The aggregate may include a colour from the visible spectrum. The aggregate may be fluorescent. The aggregate may include a UV and/or IR visible colour. The aggregate may include one of red, orange, yellow, green, blue, pink, purple, white and/or a combination of these colours. Examples of contrasts according to the third aspect may include: black soil with red aggregate, sand coloured soil with blue aggregate.

The method may comprise a step of selecting an appropriately contrasting colour in dependence on the colour of the local underground environment. It will of course be appreciated that the colour of the aggregate may contrast with some types of ground but not with other types of ground. For example, red aggregate may contrast with dark coloured ground such as peat, but may not contrast with ground comprising red coloured clay based soils.

Preferably the aggregate is not substantially black in colour. Preferably the aggregate is not substantially brown in colour. Preferably the aggregate is not substantially grey in colour. Colours such as black, brown and/or grey may, in some circumstances, not be readily identified as indicative the position of an underground utility. Preferably the colour is a colour which is not normally associated with being in the local underground environment.

The colour of the aggregate may be chosen in dependence on the type of underground utility whose position is being indicated. In the United Kingdom for example, a national colour coding system is in place in which a pipe, cable or duct of a particular underground utility has been assigned a particular colour. For example gas pipes may be indicated by yellow aggregate, water pipes may be indicated by blue aggregate, high voltage lines may be indicated by red aggregate, communications ducts may be indicated by green aggregate.

There may be provided a mixture of colours of aggregate. This may indicate the presence of more than one underground utility.

The aggregate may have a colour which is in high contrast to the colour of the local underground environment. A high contrast between the colour of the aggregate and the colour of the local underground environment may improve the probability that aggregate will be noticed by someone excavating proximate the pipe and/or cable. Colours in high contrast with each other might include complementary colours. Colours in high contrast with each other might not include colour associated with the same primary colour. For example, the method of providing aggregate having a colour which is in high contrast to the local underground environment might include providing purple aggregate into an excavation in sand coloured soil, or providing yellow aggregate into an excavation in black soil. For example, the method of providing aggregate having a colour which is in high contrast to the local underground environment might not include providing orange aggregate into an excavation in sand coloured soil.

The method may include the step of adding the aggregate according to the third aspect to aggregate which already surrounds an underground utility. The method may include the step of replacing aggregate which already surrounds an underground utility with aggregate according to the third aspect.

According to a fourth aspect of the disclosure there is a method of installing an underground utility, the method comprising indicating the position of the underground utility according to the third aspect of the disclosure. Said method is disclosed but is not part of the invention. The method may include installing a plurality of underground utilities and providing aggregate of different colours proximate each underground utility.

According to a fifth aspect of the disclosure there is provided an underground arrangement comprising an underground utility and a volume of aggregate proximate the underground utility, wherein the aggregate has a colour which is in contrast to the colour of the local underground environment. Said underground arrangement is disclosed but is not part of the invention.

The underground utility and aggregate may be arranged as set out above in relation to the third aspect of the disclosure. The underground arrangement may have a form resulting from earring out the method according to the third aspect.

### Description of the Drawings

Embodiments of the present invention will now be described by way of example only with reference to the accompanying schematic drawings of which:
Figure 1 shows a perspective view of a balling machine according to an embodiment of the first aspect of the invention;
Figure 2 shows a perspective view of an inlet conveyor according to an embodiment of the first aspect of the invention; and
Figure 3 shows a perspective view of an exit conveyor according to an embodiment of the first aspect of the invention;
Figure 4 shows a perspective view of an input unit according to an embodiment of the first aspect of the invention;
Figure 5 shows a perspective view of an internal mixing device according to an embodiment of the first aspect of the invention;
Figure 6 shows a view of an internal mixing device and scraper from within a rotatable tube according to an embodiment of the first aspect of the invention;
Figure 7 shows a view of a scraper from within a rotatable tube according to an embodiment of the first aspect of the invention;

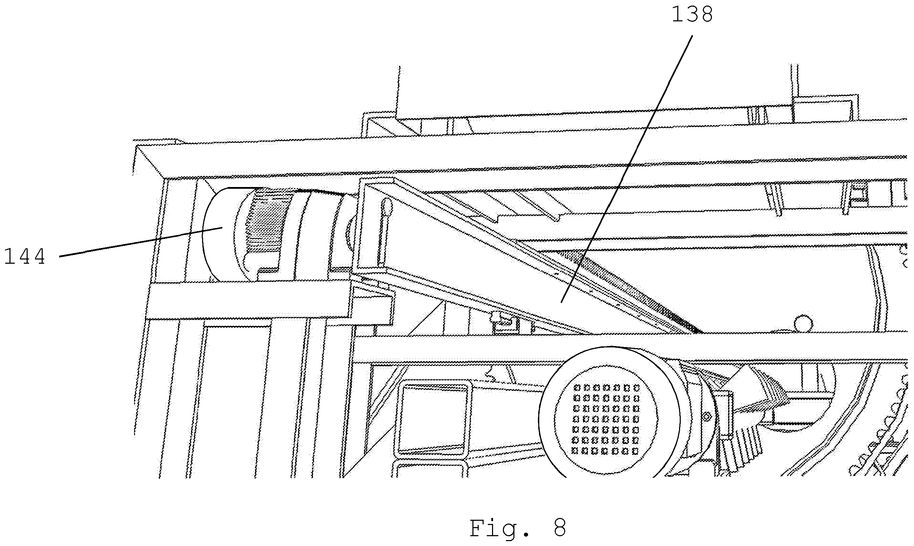

Figure 8 shows a view from the inlet end of a rotatable tube according to an embodiment of the first aspect of the invention;
Figure 9 shows a flow diagram of a method according to a first embodiment of the second aspect of the invention;
Figure 10 shows an underground arrangement resulting from a method according to a first example of the third aspect of the disclosure (not part of the invention);
Figure 11 shows an underground arrangement resulting from a method according to a second example of the third aspect of the disclosure (not part of the invention); and
Figure 12 shows examples of underground arrangements according to further examples of the third aspect of the disclosure (not part of the invention).

### Detailed Description

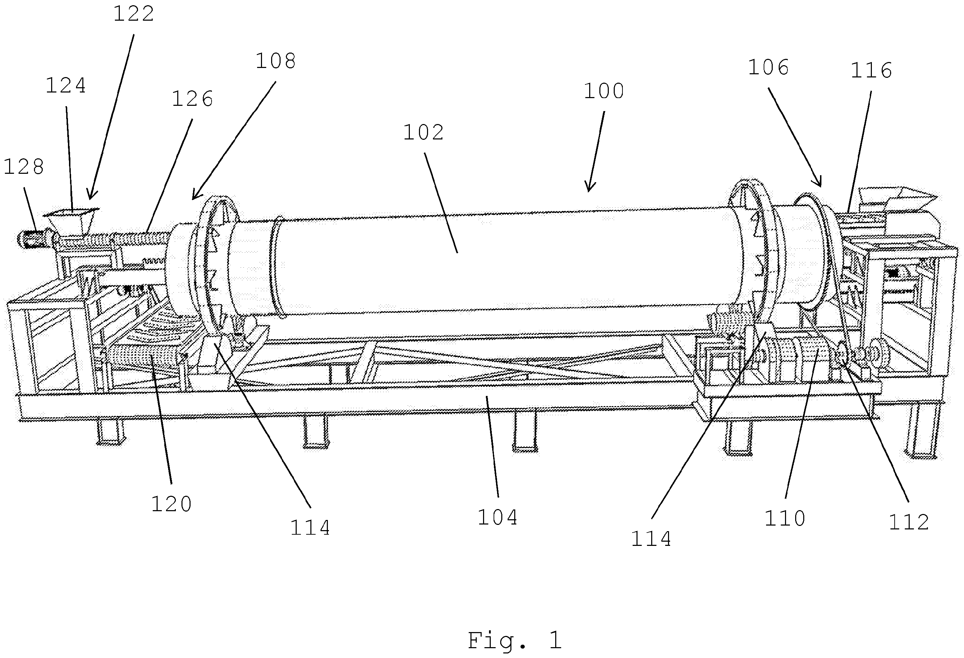

Figure 1 shows a balling machine 100 according to an embodiment of the first aspect of the invention. Balling machine 100 comprises a rotatable tube 102 supported upon a frame 104. As can be seen the frame 104 is so arranged that the inlet end 106 of the rotatable tube 102 is elevated with respect to the outlet end 108. The rotatable tube 102 is therefore inclined at an angle of approximately 7 degrees. Hydraulic jacks (not shown) are provided at either end of the frame 104 enabling the angle of elevation to be altered. A motor 110 is provided which, in use, drives a chain and sprocket system 112 which in turn drives rotational movement of the rotatable tube 102. Rollers 114 provided proximate either end of the rotatable tube 102 allow the rotatable tube 102 to rotate with respect to the frame 104.

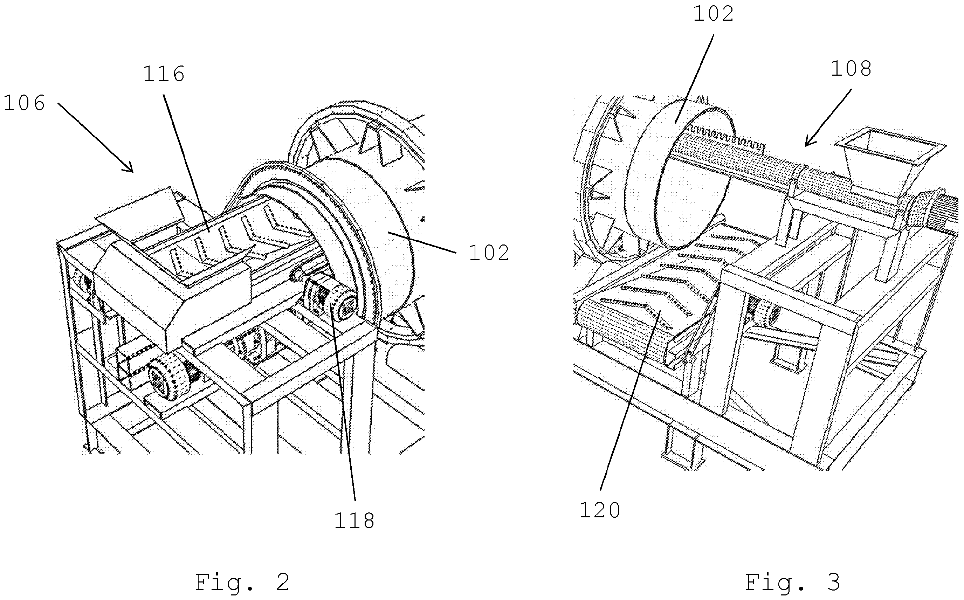

As also shown in Figure 2, at the inlet end 106 of the rotatable tube 102 an inlet conveyor 116 is provided. In use, input materials such as waste fines and dust are deposited onto inlet conveyor 116. Inlet conveyor 116 then transports the input material into the input end 106 of rotatable tube 102. Inlet conveyor 116 is driven by motor 118 provided adjacent to the conveyor. The inlet conveyor 116 terminates within the rotatable tube 102. In use, input material falls from the end of the conveyor into the rotatable tube 102.

As also shown in Figure 3, below the outlet end 108 of the rotatable tube 102 an exit conveyor 120 is provided. In use, balled material falls from the outlet end 108 of the rotatable tube 102 and onto the exit conveyor 120. The exit conveyor 120 is arranged to transport material away from the rotatable tube 102.

A screening unit (not shown) is optionally provided at the end of the exit conveyor 120. The screening unit is arranged to separate the balled material on the basis of particle size. In dependence on the screen size selected, the screening unit diverts different sizes of particles to different stockpiles. A recycling conveyor is also optionally provided which returns undersized, oversized and broken particles to the inlet conveyor 116.

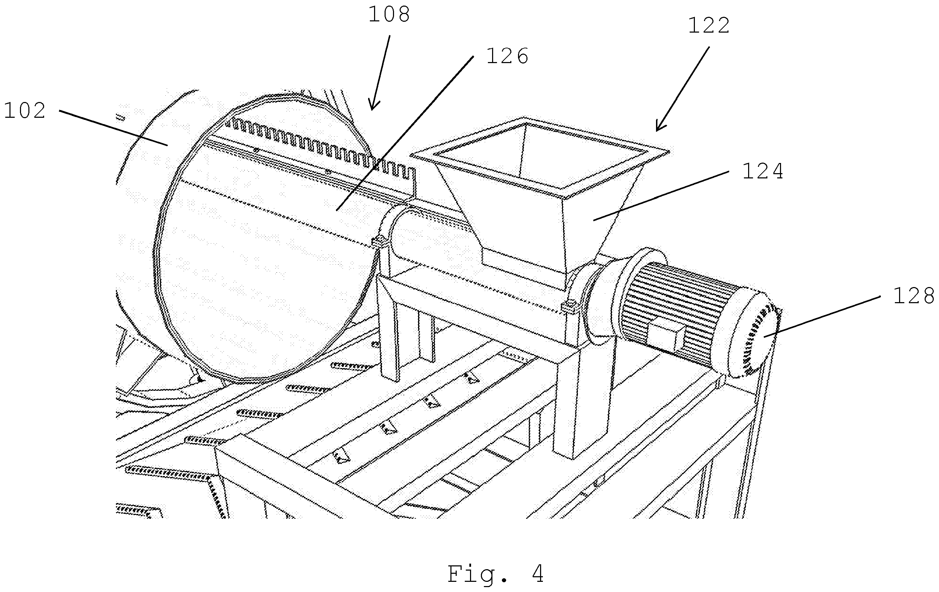

As also shown in Figure 4, an input unit 122 for adding binder materials and/or absorber material is provided on the frame 104. Input unit 122 comprises hopper 124 which feeds feed pipe 126. A screw is provided within the feed pipe 126 for transporting material along it. Motor 128 is provided at an end of the feed pipe 126 to drive the screw. Feed pipe 126 extends into the outlet end 108 of the rotatable tube 102 and substantially parallel to the rotatable tube 102. Feed pipe 102 is positioned proximate the top of the rotatable tube 102 in order to reduce the chance of interfering with the material being balled. The underside of feed pipe 102 is provided with individually adjustable, and remotely adjustable, exit holes. The exit holes are distributed evenly along the feed pipe 126 beginning from where the feed pipe 126 enters the rotatable tube 102. The feed pipe 126 terminates within the rotatable tube 102 and part way along it.

In use, binder material and/or absorber material are provided into the hopper 124. When required, motor 128 is operated, which transports the binder material and/or absorber material along the feed pipe 126. Exit hole sizes are then adjusted such that the desired amount of material is deposited into the tube 102 at the desired positions.

According to another embodiment of the first aspect of the invention, a second input unit is provided. The second input unit has the features of the above described input unit, however the feed pipe of the second input unit extends into the inlet end 108 of the tube 102.

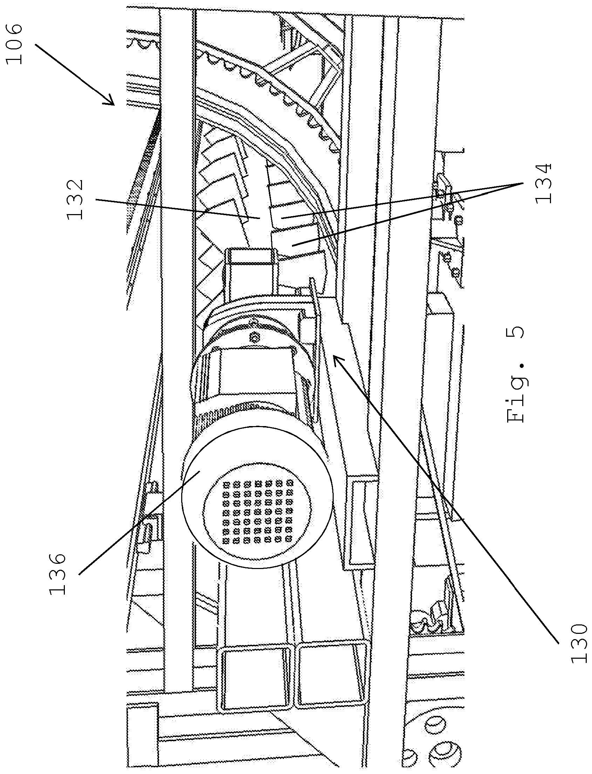

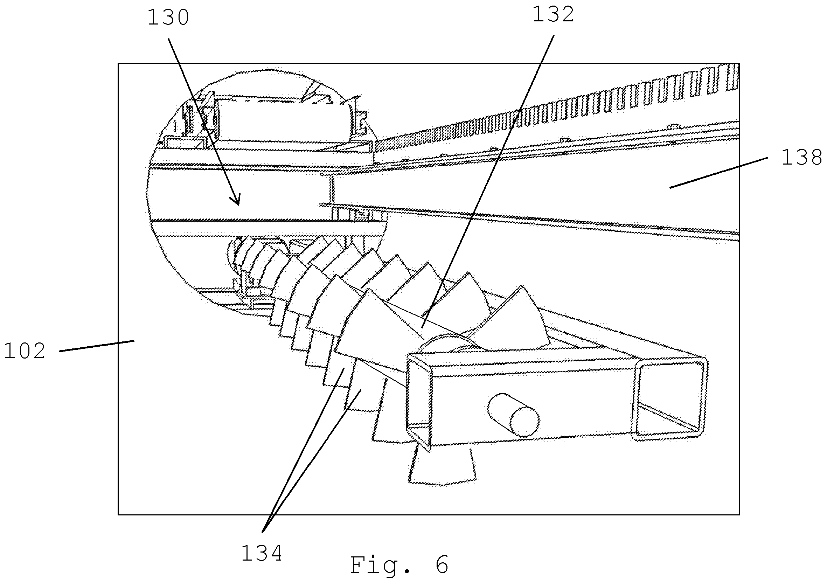

Figures 5 and 6 show an internal mixing device 130. Internal mixing device 130 comprises a rotatable shaft 132 onto which are mounted a plurality of blades 134. Blades 134 are provided in sets of three positioned at 120 degree intervals around the shaft 132. A plurality of sets are provided along the shaft 132. In the embodiment shown, eight sets of blades 134 are provided. Motor 136 is provided at one end of the shaft 132 and in use drives rotational movement of the shaft 132 and blades 134.

Internal mixing device 130 extends into tube 102 from the input end 106 of the tube 102 where the internal mixing device 130 is supported on the frame 104. The shaft 132 extends substantially parallel to the axis of the tube 102. The shaft 132 extends approximately a third of the way down the tube 102 from the input end 106. The internal mixing device 130 is disposed at the bottom of the tube 102 such that the blades 134 pass close to, but do not touch, the internal surface of the tube 102. The internal mixing device 130 defines a first lengthways portion of the tube 102 in which the material is primarily mixed, the remainder of the length of the tube 102 can be considered to be a second portion in which the material is primarily formed into balls.

Input conveyor 116 is arranged to deposit input material onto the internal mixing device 130. In use internal mixing device 130 advantageously breaks up any clumps of input material. Blades 134 have substantially flat faces which are in a plane substantially perpendicular to the axis of the shaft 132. Such a blade arrangement allows the blades 134 to have a slicing action on the material without pushing it along the tube 102. This advantageously enables the blades 134 to be rotated faster with reduced risk that they will throw the material from the tube 102.

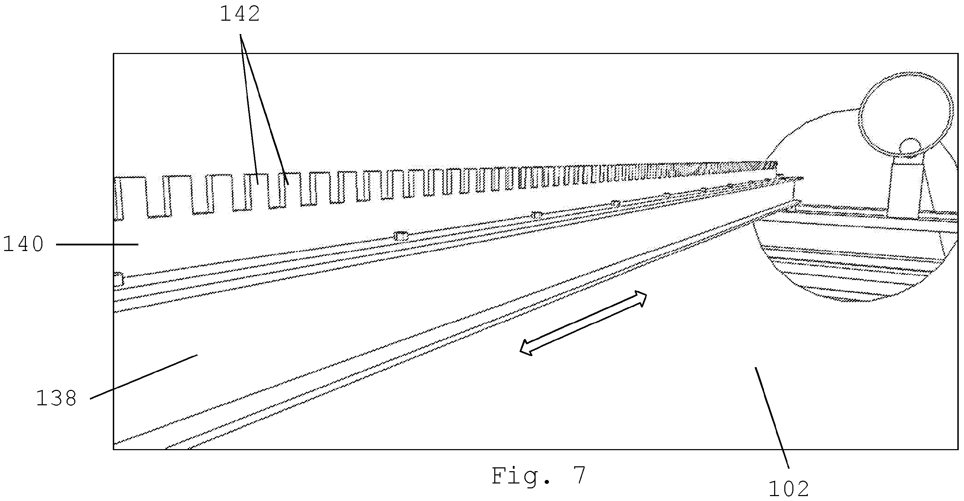

Figures 6 and 7 show a scraper 138 disposed within the tube 102. The scraper 138 extends substantially parallel to the axis of the tube 102, along one side of the tube 102, and is proximate the internal surface of the tube 102. The scraper has a leading edge 140 having teeth 142 disposed along it. The scraper 138 is slideably mounted to the frame 104 at either end. A motor 144 with an offset cam is arranged to drive the scraper 138 in a reciprocating motion substantially parallel to the axis of the tube 102. In use the scraper 138 helps prevent material building-up on the internal surface of the tube 102, particularly when balling wet or adhesive materials.

A fluid input device (not shown) for delivering fluid into the tube is also provided. The fluid input device comprises a pipe extending along the top of the tube, the pipe having a plurality of nozzles evenly distributed along its underside. The nozzles are remotely adjustable to enable the rate of fluid throughput to be remotely adjusted.

A control unit (not shown) is provided to operate and adjust: the rotational speed of the tube 102, the angle of inclination of the tube 102, the rotational speed of the internal mixer 130, the input unit 122 and the exit holes thereof, the inlet conveyor 116, exit conveyor 120, fluid input device and the nozzles thereof, screening unit, and recycling conveyor.

In an alternative embodiment of the first aspect of the invention, the internal surface of the tube 102 comprises 12 equally spaced ridges extending lengthways along the length of the tube 102. The ridges have a circumferential width of 25mm and height (in the radial direction) of 6mm. In this embodiment, the scraper 138 comprises a leading edge having teeth spaced apart such that, in use, as the scraper reciprocates the material builds up on the internal surface of the tube 102 creating circumferential rings of material. The teeth and travel of the reciprocating scraper are such that every 5cm there is a ridge having a height (in the radial direction) of 12mm.

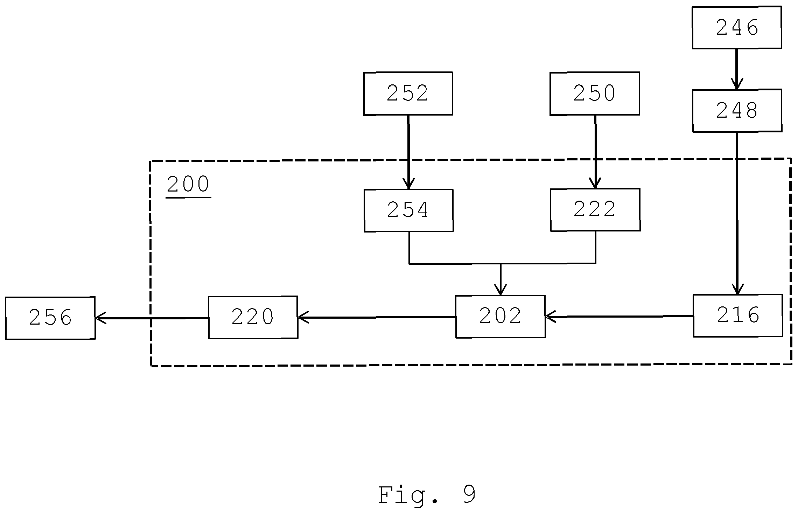

A method of balling material for use in the manufacture of aggregate will now be described according to a first embodiment of the second aspect of the invention and with reference to Figure 9.

According to the embodiment, substantially dry steelmaking slag 246 is provided. Prior to balling, the slag 246 is put through a crushing and screening process 248 to reduce the slag 246 to fine particles (fines) having an average particle size between approximately 10 microns and approximately 6mm.

A balling machine 200, substantially as described in reference to the above described embodiment of the first aspect of the invention, is provided. The rotational speed and angle of inclination of the rotatable tube 202 will be set in dependence on the desired ball size of the balled material, which in turn will depend on the intended application of the aggregate formed from the ball. Adjustment of the rotational speed and angle of inclination can be made during the balling process if required. The internal mixing device will also be set into operation.

The fine particles of slag 246 (the input material) are then deposited onto the inlet conveyor 216 of the balling machine 200. The inlet conveyor 216 transports the slag 246 into the inlet end of rotatable tube 202. The inlet conveyor 216 terminates within the tube 202 and deposits the slag 246 therein. The inlet conveyor 216 terminates above the internal mixing device and so deposits the material into the path of rotating paddles of the internal mixing device.

Binder material in the form of cementitious material 250 is provided into the hopper of input unit 222. The binder material 250 is then transported down the feed pipe, by operation of the screw feeder, and is deposited into the tube 202 and into the path of rotating paddles of the internal mixing device. The slag 246 and binder material 250 are thoroughly mixed by the internal mixing device.

Water 252 is added via fluid input device 254. As the material is tumbled in the tube, the water 252 and binder 250 cause the particles of slag 246 to begin to aggregate to form larger particles of material (balls). As the material is tumbled and mixed, the material will move through the tube 202, under the influence of gravity, towards the outlet end of the tube 202.

Optionally colourant is added to the material being balled. The colourant is provided into the fluid input device from a reservoir holding liquid colourant. The fluid input device then adds the colourant to the rotatable tube.

When the material is still in the portion of the tube 202 with the internal mixing device, the mixing device will break down the balls as they build-up. However once the slag 246 and binder 250 move beyond the end of the internal mixing device, the balls will continue to grow due to the tumbling motion. The tumbling occurs due to friction between the balls and the internal surface of the tube 202 and the increasing inclination of the surface on which the balls are resting, causing the balls to roll down the tube under the action of gravity and be elevated as the tube 202 rotates. As the balls roll down the internal surface of the tube 202, they gather material and grow in size.

The mixture of wetted slag 246 and binder 205 can stick to, and then build-up on, the internal surface of the tube 202. The scraper prevents this build-up by the leading edge of the scraper shaving off build-up over a certain thickness. The reciprocating movement of the scraper helps prevent build-up of the slag 246 and binder 205 on the scraper itself.

Once the balls reach the outlet end of the tube 202 they will fall onto the exit conveyor 220. The exit conveyor 220 transports the balled material 256 away from the balling machine 200 to be stockpiled.

According to a second embodiment of the second aspect of the invention, a method of balling wet material is now described. Firstly wet material is provided, for example a slurry of waste fines, landfill leachate, and water. The slurry is input into the inlet end of the tube. When wet material is fed into the tube, the inlet conveyor may be exchanged for a chute or conduit.

Similarly to the first embodiment, binder is added to the slurry. The slurry is mixed with binder by the internal mixing device and the rotation of the tube.

Unlike with dry input material, wet input material will naturally roll into balls as the tube rotates, without the need to add water. If the material is too wet it is difficult to control the size of the balls and the material will continue to aggregate. Absorber material is therefore added to the material being balled. According to the second embodiment, a second input unit is provided for adding the absorber. The absorber material absorbs some of the water content of the balls thereby allowing control of the size of the balled material.

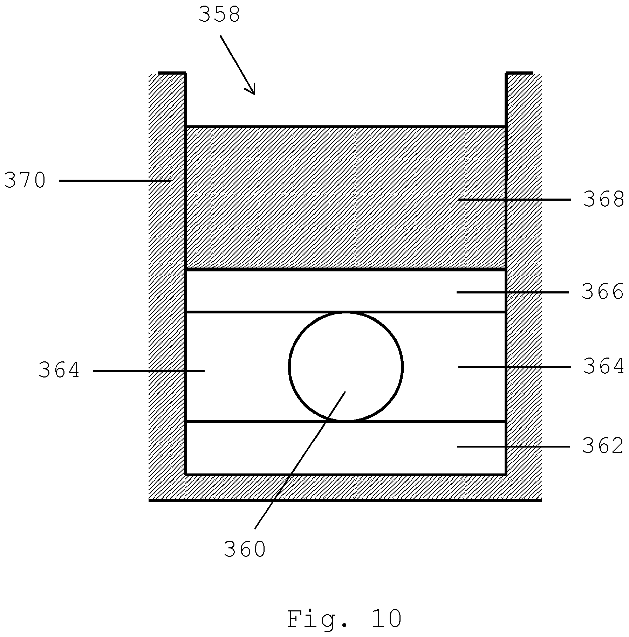

A method of indicating the position of an underground utility will now be described according to a first example of the third aspect of the disclosure and with reference to Figure 10. Said method is disclosed but is not part of the invention.

According to the first example of the third aspect the method of indicating the position of an underground utility is carried out as a part of a method of laying an underground utility.

Firstly a trench 358 is excavated. According to the first example of the third aspect the trench 358 has a substantially rectangular cross section. It will of course be appreciated that the skilled person will know of a variety of suitable alternative cross sections for the trench 358.

Bedding 362 is provided on the bottom of the trench 358. The bedding 362 comprises a substantially level layer of aggregate. The bedding 362 comprises aggregate that has a colour which is in contrast to the colour of the local underground environment 370. In this example the local underground environment 370 comprises the earth surrounding the trench 358.

A utility 360 is provided within the trench 358 on top of the bedding 362. The bedding 362 provides support for the utility 360 and serves to maintain the utility 360 at the correct line and level.

Haunching 364 is provided around the sides of the utility 360. The haunching 364, particularly in the case where the utility 360 is a pipe or duct, helps support the weight of the utility 360. The haunching 364 comprises aggregate that has a colour which is in contrast to the colour of the local underground environment 370.

An initial layer of backfill 366 is provided on top of the haunching 364 and any exposed bit of the utility 360. The initial backfill 366 typically serves to prevent the utility 360 from damage upon placement of final backfill 368. The initial backfill 366 comprises aggregate that has a colour which is in contrast to the colour of the local underground environment 370.

The final backfill 368 is provided on top of the initial backfill 366. The final backfill 368 comprises earth removed when excavating the trench.

The utility 360 is therefore surrounded by material comprising aggregate having a colour which is in contrast to the colour of the local underground environment 370. If at a later date the site is excavated there will be a clear indication of the utility 360 being positioned in the ground. An indication of the utility's 360 position will be given regardless of the angle of the excavation in relation to the utility 360.

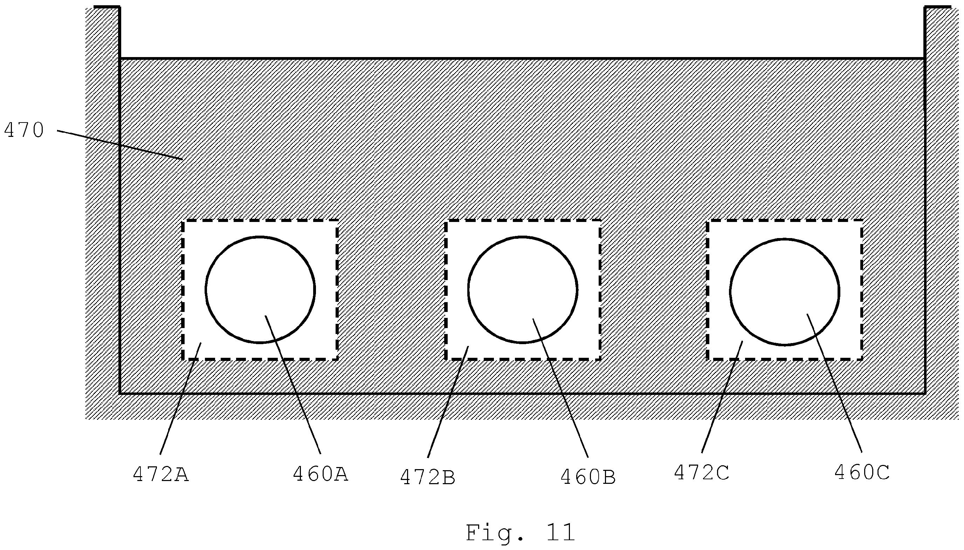

A method of indicating the position of an underground utility will now be described according to a second example of the third aspect of the disclosure and with reference to Figure 11. Said method is disclosed but is not part of the invention.

According to the second example the method of indicating the position of an underground utility is carried out as a part of a method of maintaining a plurality of underground utilities 460A-C.

According to the second example underground utility 460A is a drinking water pipe, underground utility 460B is an electricity cable duct and underground utility 460C is a gas pipe. Each underground utility 460A-C is excavated for maintenance activities. Following maintenance activities, and as the underground utilities are re-buried, volumes 472A-C which surround the underground utilities are filled with a coloured aggregate. Volume 472A is filled with aggregate comprising blue aggregate. Volume 472B is filled with aggregate comprising red aggregate. Volume 472C is filled with aggregate comprising yellow aggregate. The blue, red and yellow aggregate are in contrast with the colour of the local underground environment 470.

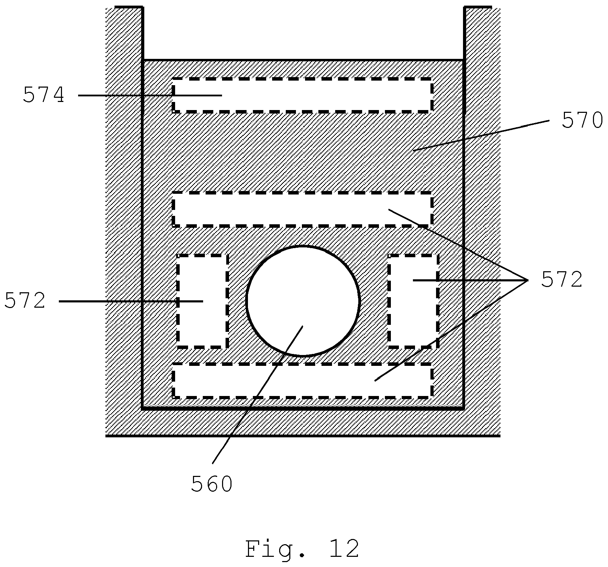

Figure 12 shows examples of underground arrangements according to further examples of the third aspect of the disclosure. Said underground arrangements are disclosed but are not part of the invention. Volumes 572 represent volumes proximate the underground utility 560 in which aggregate having a colour which is in contrast to the colour of the local underground environment 570 may be positioned.

## Claims

1. A balling machine (100) for use in the manufacture of aggregate, the balling machine comprising:
a rotatable tube (102) having an inlet end (106) and an outlet end (108); and
a scraper (138) disposed within the rotatable tube (102), the scraper comprising a leading edge having teeth (142) or serrations;
wherein the scraper (138) is arranged to make a reciprocating movement parallel to an axis of the rotatable tube, the teeth (142) or serrations being spaced apart further than the distance over which the scraper oscillates such that the scraper allows, as the scraper reciprocates in use, a build-up of circumferential ridges of material on an internal surface of the rotatable tube (102).

2. A balling machine (100) according to claim 1, wherein the scraper (138) extends along the length of the rotatable tube (102).

3. A balling machine (100) according to any preceding claim, further comprising fluid input device arranged to supply liquid into the rotatable tube (102).

4. A balling machine (100) according to claim 3, wherein the fluid input device comprises a pipe extending along the length of the rotatable tube (102) and within the rotatable tube (102), the pipe having adjustable nozzles provided at predetermined positions along the pipe.

5. A balling machine (100) according to any preceding claim, further comprising an internal mixing device (130) disposed within the rotatable tube (102);
the mixing device (130) comprising movable elements (134) that are disposed in a lower region of the rotatable tube (102) and are drivingly movable relative to the rotatable tube (102).

6. A balling machine (100) according to claim 5, wherein the rotatable tube (102) has a length and the internal mixing device (130) extends partway along the length of the rotatable tube (102); wherein the internal mixing device (130) defines a first lengthways portion of the rotatable tube (102), the internal mixing device (130) being arranged to mix the contents of the first portion in use, and wherein the rotatable tube (102) comprises a second lengthways portion in which the internal mixing device (130) does not extend, wherein rotation of the rotatable tube (102) causes agglomeration of the contents of the second portion by a rolling motion in use; and wherein the first portion is closer to the inlet end (106) than the second portion.

7. A balling machine (100) according to claim 5 or 6, wherein the internal mixing device (130) comprises paddles and/or blades (134) mounted to a rotatable shaft (132).

8. A balling machine (100) according to any preceding claim, wherein an internal surface of the rotatable tube (102) comprises one or more ridge extending lengthways along the rotatable tube (102).

9. A balling machine (100) according to any preceding claim, further comprising a first input unit (122), wherein the first input unit (122) comprises a feed pipe (126) arranged to add a first additional material at predetermined positions within the rotatable tube (102); preferably the feed pipe (126) of the first input unit (122) comprises adjustable sized exit holes to control the amount of material which can be input by the first input unit (122).

10. A method of balling material, the method comprising the steps of:
providing a balling machine (100) according to any of claims 1 to 9;
feeding an input material (246) into the inlet end (106) of the rotatable tube (102);
adding a binder material (250) to the input material (246);
balling the input material (246) by rotating the rotatable tube (102), wherein the scraper (138) is reciprocated and causes circumferential ridges of the input material (246) to build up on the internal surface of the rotatable tube (102); and
collecting balled material from the outlet end (108) of the rotatable tube (102).

11. A method of balling material according to claim 10, wherein the method further comprises the step of adding an absorber material to the input material.

12. A method of balling material according to any of claims 10 to 11, wherein the input material (246) comprises at least one of: steelmaking slag, waste material from quarrying, waste material from construction or demolition, and waste material from waste recycling activities.

13. A method of balling material according to any of claims 10 to 12, wherein the method further comprises the step of adding material proximate the outlet end (108) of the rotatable tube (102) so as to coat the material being balled.

## Patentansprüche

1. Apparatur zum Generieren und Sammeln von Perlen, wobei die Apparatur umfasst:
(a) einen Perlengenerator zum Generieren von in einem Trägerfluid dispergierten Perlen, wobei der Perlengenerator eine mikrofluidische Vorrichtung oder einen piezoelektrischen Tröpfchengenerator umfasst; und
(b) eine Vorrichtung zum Separieren von Perlen von einem Trägerfluid, wobei die Vorrichtung so gestaltet ist, dass sie in einem Trägerfluid dispergierte Perlen vom Perlengenerator aufnimmt,
**dadurch gekennzeichnet, dass**
die Vorrichtung (1) zum Separieren von Perlen von einem Trägerfluid umfasst:
ein Perlenaufnahmemittel (4, 8) zur Aufnahme von in einem Trägerfluid dispergierten Perlen,
ein Fluidentfernungsmittel (5), mit dem Fluid aus dem Perlenaufnahmemittel in einer ersten Fluidentfernungszone (A) durch Anwendung von vermindertem Druck entfernt werden kann, und
ein Perlensammelmittel (7), mit dem Perlen aus dem Perlenaufnahmemittel in einer Perlensammelzone durch Anwendung von vermindertem Druck entfernt werden können,
wobei das Perlenaufnahmemittel bewegbar ist, so dass Perlen von der ersten Fluidentfernungszone zur Perlensammelzone bewegbar sind.

2. Apparatur gemäß Anspruch 1, wobei Perlen und Fluid auf einem Teil des Perlenaufnahmemittels in einer Perlenaufnahmezone vorgelegt werden.

3. Apparatur gemäß Anspruch 2, wobei das Perlenaufnahmemittel bewegbar ist, so dass Perlen und Fluid von der Perlenaufnahmezone zur ersten Fluidentfernungszone bewegbar sind.

4. Apparatur gemäß einem vorhergehenden Anspruch, wobei das Perlenaufnahmemittel drehbar ist.

5. Apparatur gemäß einem vorhergehenden Anspruch, wobei das Perlenaufnahmemittel ringförmig oder scheibenförmig ist.

6. Apparatur gemäß einem vorhergehenden Anspruch, wobei das Perlenaufnahmemittel ein Sieb (8) umfasst.

7. Apparatur gemäß einem vorhergehenden Anspruch, wobei das Perlenaufnahmemittel flüssigkeitspermeabel ist und mit dem Fluidentfernungsmittel Fluid durch das flüssigkeitspermeable Perlenaufnahmemittel entfernt werden kann.

8. Apparatur gemäß einem vorhergehenden Anspruch, wobei das Perlensammelmittel einen oder mehrere Wirbelgeneratoren (7) umfasst.

9. Apparatur gemäß Anspruch 8, wobei das Perlensammelmittel einen oder mehrere Wirbelunterdrücker (28) umfasst.

10. Apparatur gemäß einem der Ansprüche 8 oder 9, wobei ein Wirbelgenerator oder Wirbelunterdrücker mit einer Probenahmeöffnung (132) ausgestattet ist und eine Probenahmeführung (133) vorgesehen ist, um Perlen zur Probenahmeöffnung zu leiten.

11. Apparatur gemäß Anspruch 10, wobei die Probenahmeführung eine oder mehrere Erhebungen umfasst, um Perlen zur Probenahmeöffnung zu leiten.

12. Apparatur gemäß einem vorhergehenden Anspruch, umfassend eine zweite Fluidentfernungszone (B), die von der ersten Fluidentfernungszone getrennt ist, in der ein Fluidentfernungsmittel Fluid aus dem Perlenaufnahmemittel entfernen kann.

13. Verfahren zum Generieren von Perlen in einem Trägerfluid und Separieren von Perlen vom Trägerfluid, wobei das Verfahren umfasst:
(i) Bereitstellen eines Perlengenerators, der eine mikrofluidische Vorrichtung oder einen piezoelektrischen Tröpfchengenerator umfasst, und Verwenden des Perlengenerators zum Generieren von in einem Trägerfluid dispergierten Perlen;
(ii) Vorlegen der im Trägerfluid dispergierten Perlen auf einem Perlenaufnahmemittel;
(iii) Entfernen wenigstens eines Teils des Trägerfluids unter Verwendung von vermindertem Druck;
(iv) Bewegen des Perlenaufnahmemittels; und
(v) Sammeln der Perlen aus dem Perlenaufnahmemittel unter Verwendung von vermindertem Druck.

## Revendications

1. Appareil destiné à la génération et à la collecte de billes, ledit appareil comprenant :
(a) un générateur de billes destiné à générer des billes dispersées dans un fluide porteur, le générateur de billes comprenant un dispositif microfluidique ou un générateur de gouttelettes piézoélectrique ; et
(b) un dispositif destiné à séparer des billes d'un fluide porteur, le dispositif étant agencé pour recevoir des billes dispersées dans un fluide porteur à partir du générateur de billes,
**caractérisé en ce que**
le dispositif (1) destiné à séparer des billes d'un fluide porteur comprend :
un moyen de réception de billes (4, 8) destiné à recevoir des billes dispersées dans un fluide porteur,
un moyen d'élimination de fluide (5) pouvant être utilisé pour éliminer le fluide du moyen de réception de billes dans une première zone d'élimination de fluide (A) par l'application d'une pression réduite, et
un moyen de collecte de billes (7) pouvant être utilisé pour retirer des billes du moyen de réception de billes dans une zone de collecte de billes par l'application d'une pression réduite,
le moyen de réception de billes étant mobile de sorte que les billes puissent être déplacées de la première zone d'élimination de fluide à la zone de collecte de billes.

2. Appareil selon la revendication 1, dans lequel les billes et le fluide sont placés sur une partie du moyen de réception de billes dans une zone de réception de billes.

3. Appareil selon la revendication 2, dans lequel le moyen de réception de billes est mobile de sorte que les billes et le fluide puissent être déplacés de la zone de réception de billes à la première zone d'élimination de fluide.

4. Appareil selon l'une quelconque des revendications précédentes, dans lequel le moyen de réception de billes est rotatif.

5. Appareil selon l'une quelconque des revendications précédentes, dans lequel le moyen de réception de billes est annulaire ou en forme de disque.

6. Appareil selon l'une quelconque des revendications précédentes, dans lequel le moyen de réception de billes comprend un maillage (8).

7. Appareil selon l'une quelconque des revendications précédentes, dans lequel le moyen de réception de billes est perméable aux liquides et le moyen d'élimination de fluide peut être utilisé pour éliminer du fluide à travers le moyen de réception de billes perméable aux liquides.

8. Appareil selon l'une quelconque des revendications précédentes, dans lequel le moyen de collecte de billes comprend un ou plusieurs générateurs de cyclone (7).

9. Appareil selon la revendication 8, dans lequel le moyen de collecte de billes comprend un ou plusieurs suppresseurs de cyclone (28).

10. Appareil selon l'une quelconque des revendications 8 et 9, dans lequel un générateur de cyclone ou un suppresseur de cyclone est pourvu d'une ouverture d'échantillonnage (132) et un guide d'échantillonnage (133) est prévu pour diriger des billes vers l'ouverture d'échantillonnage.

11. Appareil selon la revendication 10, dans lequel le guide d'échantillonnage comprend une ou plusieurs saillies destinées à diriger des billes vers l'ouverture d'échantillonnage.

12. Appareil selon l'une quelconque des revendications précédentes, comprenant une seconde zone d'élimination de fluide (B) séparée de la première zone d'élimination de fluide dans laquelle un moyen d'élimination de fluide peut être utilisé pour éliminer du fluide du moyen de réception de billes.

13. Procédé de génération de billes dans un fluide porteur et de séparation de billes du fluide porteur, le procédé consistant notamment à :
(i) fournir un générateur de billes comprenant un dispositif microfluidique ou un générateur de gouttelettes piézoélectrique et utiliser ledit générateur de billes pour générer des billes dispersées dans un fluide porteur ;
(ii) placer les billes dispersées dans le fluide porteur sur un moyen de réception de billes ;
(iii) éliminer au moins une partie dudit fluide porteur en appliquant une pression réduite ;
(iv) déplacer le moyen de réception de billes ; et
(v) collecter lesdites billes depuis le moyen de réception de billes en appliquant une pression réduite.
